# EUROPÄISCHE PATENTANMELDUNG

(11) **EP 0 589 122 A1**
(43) Veröffentlichungstag der Anmeldung: **30.03.1994**
(21) Anmeldenummer: 92600008.4
(22) Anmeldetag: 24.09.1992
(51) Int. Cl.: F03G 7/10

(54) **Aggregat zur Erzeugung mechanischer Energie**

(71) Anmelder: Haroutoun Karramanoukian, Aleppo-Syrien (SY)
(72) Erfinder: Haroutoun Karramanoukian, Aleppo-Syrien (SY)
(74) Vertreter: Argyriadis, Korinna

(57) **Zusammenfassung**

Die Erfindung betrifft die Entwicklung eines mechanisch und pneumatisch gesteuerten Antriebsaggregats zur Erzeugung mechanischer Energie durch Ausnutzung des Hebelprinzips und zwar der permanenten Verschiebung des Schwerpunktes wirkender Kräfte (Schwere- und Fliehkraft) mittels Steuerung mechanisch und pneumatisch auf- und zuklappender Hauptgelenkarme (6), die an einem Schwungrad (2) asymetrisch konstruktionsmässig angebracht sind. Die ungleichmässige Wechselwirkung zwischen den auf- und zuklappenden Hauptgelenkarmen (6), deren äussere Enden mit Hauptbeschwerern (7) bestückt sind, wird energetisch nutzbar gemacht.

## Beschreibung

Die Erfindung betrifft die Entwicklung eines mechanisch und pneumatisch gesteuerten Antriebsaggregats zur Erzeugung mechanischer Energie durch Ausnutzung des Hebelprinzips und zwar der permanenten Verschiebung des Schwerpunktes wirkender Kräfte (Svhwere- und Fliehkraft) in einem in sich abgeschlossenen Umlaufsystem .

Die Erfindung beansprucht als abegeschlossenes
System für sich und im Gegensatz zu den bisher bekannten Antriebsaggregaten aller Art, durch absolute Steuerung der Schwerpunktverlagerung des Gleichgewichts durch die Hinzufügung der beschwerten und ausgleichbewirkenden Sekundärgelenkarme, sowie deren Funktionssteuerung durch eine neuartige Starter- und Schaltreglervorrichtung zu erreichen. Im Gegensatz zu Patentanmeldung Nr. 91600001.1/4.2.91 ist das gesteuerte Hydrauliksystem durch ein leicht steuerbares Pneumatiksystem ersetzt worden.

Funktion des Aggregats
Auf einer an beiden Enden gelagerte und für die Ringverteilung für das pneumatische Steuerungssystem speziell konstruierte Antriebswelle (1) sind folgende Funktionsvorrichtungen angebracht:
1. Schwungrad (2) mit folgenden Vorrichtungen:
   a. Beiderseits Befestigungsstellen für die Hauptgelenkarme (6), die mit Hauptbeschwerern (7) bestückt sind und deren Basis Zweckstabilisierung über Lagerbrücken (15) mit Gegenüber - stehenden Kreisrädern (4) verbunden sind.
   b. Befestigungsvorrichtung für die Schlagfangstücke (11) und Schlagdämpferkolben (12) für die Hauptgelenkarme.
   c. Beiderseits angebrachte Kreisräder (14), versehen mit Führungsstäben (13) für die Betätigung der Schlagfangstücke und Schlagdämpferkolben.
2. U-Räder (3), dienen zur Befestigung des Pneumatiksystems (10).
3. Kreisräder (4) für die Befestigung der Sekundärgelenkarme, deren äussere Enden mit Sekundärbeschwerern (8) versehen sind, und Befestigungsvorrichtungen für Schlagdämpferkolben (20) für die Sekundärgelenkarme.
4. Kreisrad (5) für die Befestigung der mechanischen Pneumatik-Schaltregler (25). Das auf der Antriebswelle (1) angebrachte Schwungrad, das beiderseits mit asymetrischen Hauptgelenkarmen (6) versehen ist. Die Hauptgelenkarme sind wiederum mit Hauptbeschwerern (7) bestückt und dienen dazu, durch systematisch gesteuerte Verlagerung des Schwerpunktes wirkender Schwere- und Fliehkräfte über das unmittelbare Auf- und Zuklappen der Hauptgelenkarme das Ungleichgewicht zu erreichen und die wirkenden Kräfte in die Drehrichtung des Schwungrades und somit zum Rotieren der Antriebswelle im Uhrzeigersinn zu leiten.

Das gesteuerte Aufklappen und Zuklappen der Hauptgelenkarme (6) auf der jeweilig symetrisch aufgeteilten Schwungradhälfte funktioniert nach erfindungsgemässer Entwicklung so, dass während ein Hauptgelenkarm (I) infolge des Gewichts des Haupbeschwerers und des unmittelbaren Mitwirkens des mit Sekundärbeschwerern (8) versehenen Sekundärgelenkarmes (9) auf einer Seitenhälfte zum Aufklappen übergeht, sind die fünf vorgehenden Hauptgelenkarme (II-VI) durch Einwirkung der Haupt- und Sekundärbeschwerer schon aufgeklappt, während auf der anderen Seitenhälfte des Schwungrades der siebente (VIII) Hauptgelenkarm durch Einwirkung des Gegengewichts des Sekundärgelenkarmes und des gesteuerten Rückhubs des Pneumatiksystems (10) zum Zuklappen überführt und an der Antriebswelle (1) festgehalten wird.
Die restlichen fünf Hauptgelenkarme (VIII-XII) liegen an der Antriebswelle solange auf, bis diese wieder in den Bereich der aufzuklappenden Seitenhälfte des Schwungrades zu übergehen und fangen an, wieder Durch Einwirkung des Sekundärgelenkarmes und dessen Gewichts nacheinander aufzuklappen.

Die Funktion des Pneumatiksystems wird mittels entsprechender Schaltregler (25) nur aktiviert, wenn die Hauptgelenkarme vom aufklappenden Zustand zum Zuklappen übergehen, um dadurch eine Verlagerung des Schwerpunktes des Gleichgewichts mit unmittelbarer Unterstützung der Sekundärgelenkarme zu bewirken und eine zusätzliche Stabilisierung des Aggregatslaufvorganges herbeizuführen.

Die Entfachung der entfesselten Kräfte ist unmittelbar proportional zum jeweils auf- bzw. zuklappenden Winkel der Hauptgelenkarme zur Antriebswelle, zum Gewicht der Hauptbeschwerer und zur Anzahl der am Schwungrad angebrachten Hauptgelenkarme. Je grösser der Aufklappwinkel bzw. je kleiner der Zuklappwinkel der Hauptgelenkarme zur Antriebswelle und je mehr die Anzahl der an Schwungrad angebrachten Hauptgelenkarme ist, desto mehr kommt das Hebelprinzip zur Geltung und somit destomehr die auszunutzenden Überschusskräfte.

Die Proportionalität der Gewichtvariationen der Hauptbeschwerer ist in einem Zusammenhang mit Gewichtsausgleich zu Sekundärgewichten (Verhältnis 1:2) zu betrachten. Bei einer Gewichtszulegung des Hauptbeschwerers muss entsprechend das Verhältnis zum Gewicht der Sekundärbeschwerer bewahrt werden, um dadurch vermeidbare Umlauf - störungen des Aggregats ausgeschlossen bleiben.

Die Erfindung beansprucht als abgeschlossenes System für sich, im Gegensatz zu bisher bekannten Antriebsaggregaten aller Art, nur für die Startphase eine herkömmliche Energiequelle eines Akkumulators (16) , zu beanspruchen, um alsdann aus eigener Kraft mechanische Kräfte zu entfachen, die in jede beliebige Energieform unzuwandeln sind.

Die Eigenständigkeit des Antriebsaggregats wird dadurch erreicht, indem die in das gesamte Kreissystem eingeschaltete Starter- und Schaltreglervorrichtung (19, 25) das Antriebsaggregat zum Anlaufen bringt . Die Arbeitsweise der Starter- und Schaltreglervorrichtung ist dadurch gekennzeichnet, dass der mit Hilfe des Akkumulators (16) gestartete Elektromotor (17) einen Hilfskompressor (18) antreibt und Luft in einen Luftdruckbehälter einbläst (26), bis ein Uberdruck von 2 bar erreicht wird (Betriebsdruck). Damit ist die Arbeit der Hilfsenergiequelle beendet.

Die unter Uberdruck stehende Luft wird mit Hilfe eines Ablassreglers (21) in die Längsbohrung der Antriebswelle beiderseits eingeleitet (23) und von dort aus mit Hilfe von Schaltreglern (25) in das Pneumatiksystem weitergeleitet und der Rückhub verursacht. Der Rückhub führt mit zusätzlicher Unterstützung des Sekundärbeschwerergewichts zum Aufliegen des Sekundärgelenkarmes auf der Antriebswelle, die ihrerseits zum systematisch gesteuerten Zuklappen und Zugeklappthalten der Hauptgelenkarme auf der Antriebswelle nacheinander führen.

Für die Eigenversorgung des Aggregats wird ein Teil der freigesetzten Energie (45%) durch Einschaltung eines Elektrogenerators (22) in elektrische Energie umgesetzt und davon der eigene Energiebedarf für Elektromotor, Akkumulator, Kompressor (24) und Schaltvorrichtungen gedeckt und einen Uberschuss von mindestens 55% erzielt.

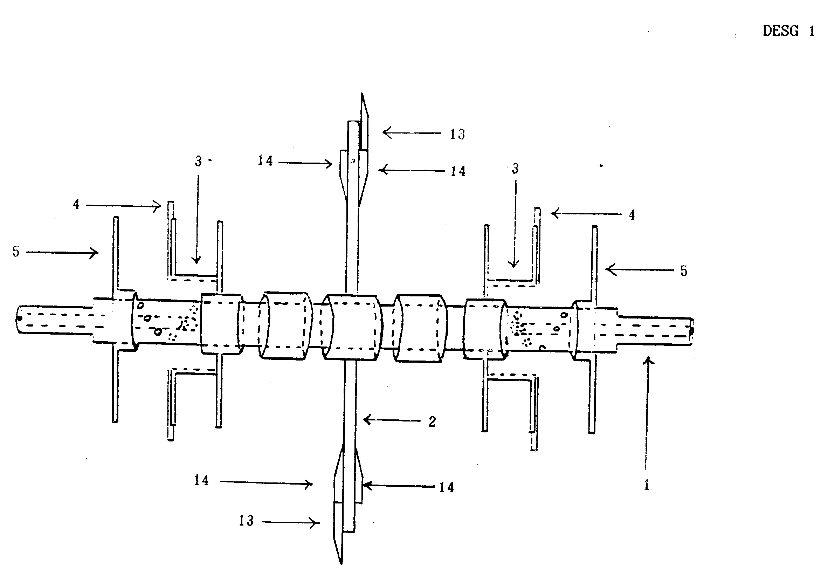

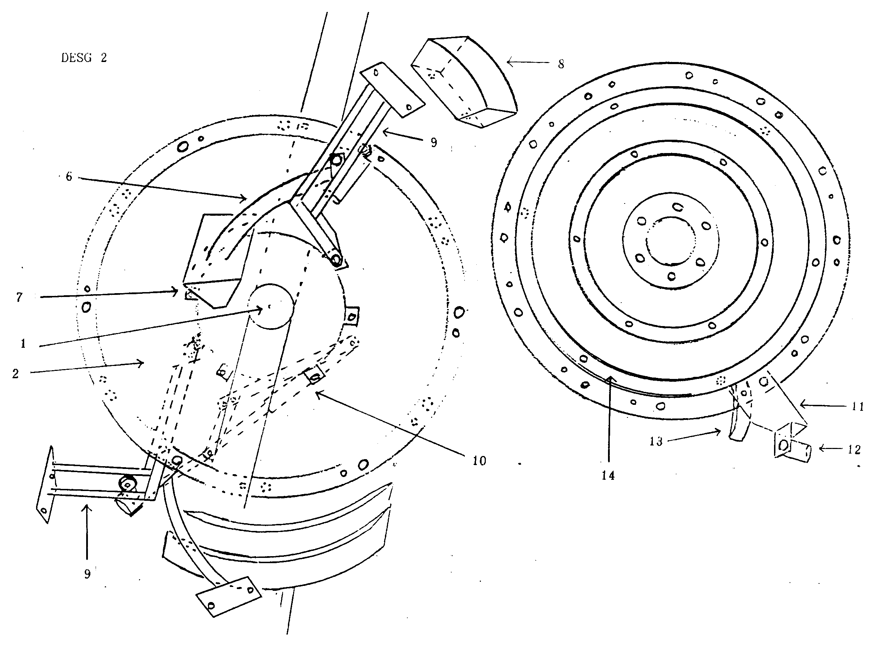

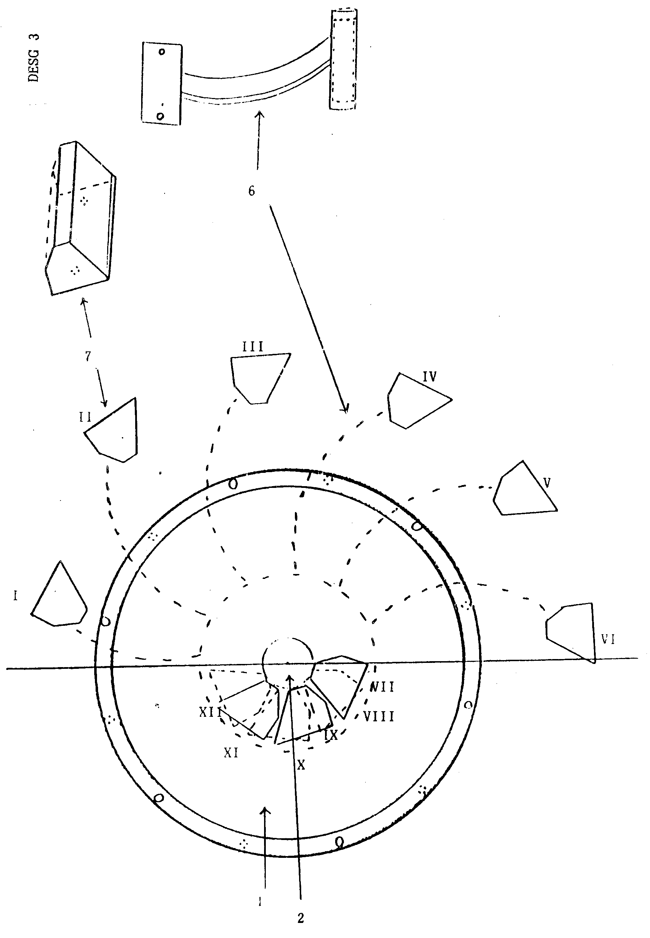

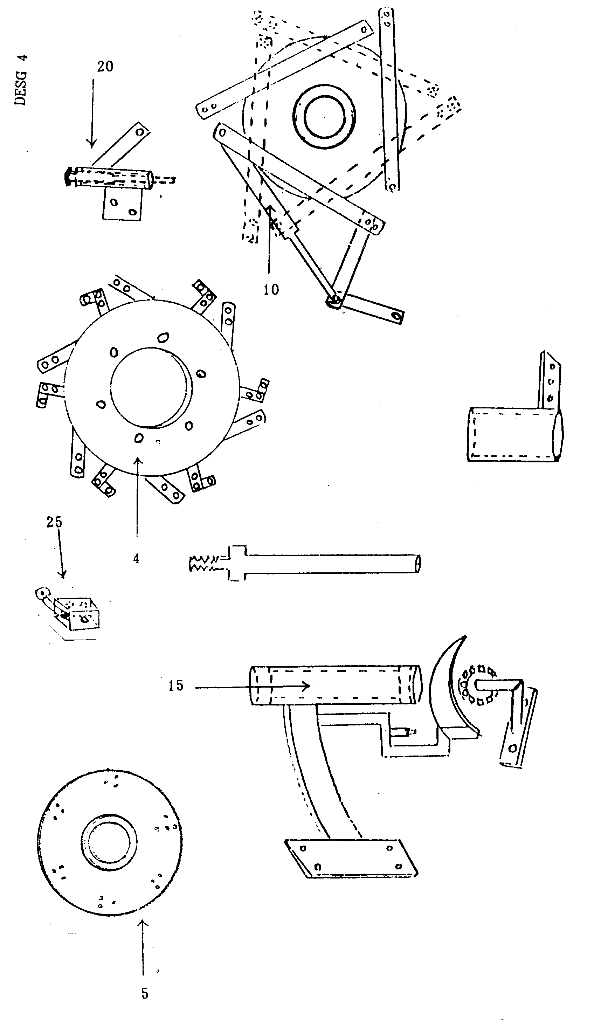

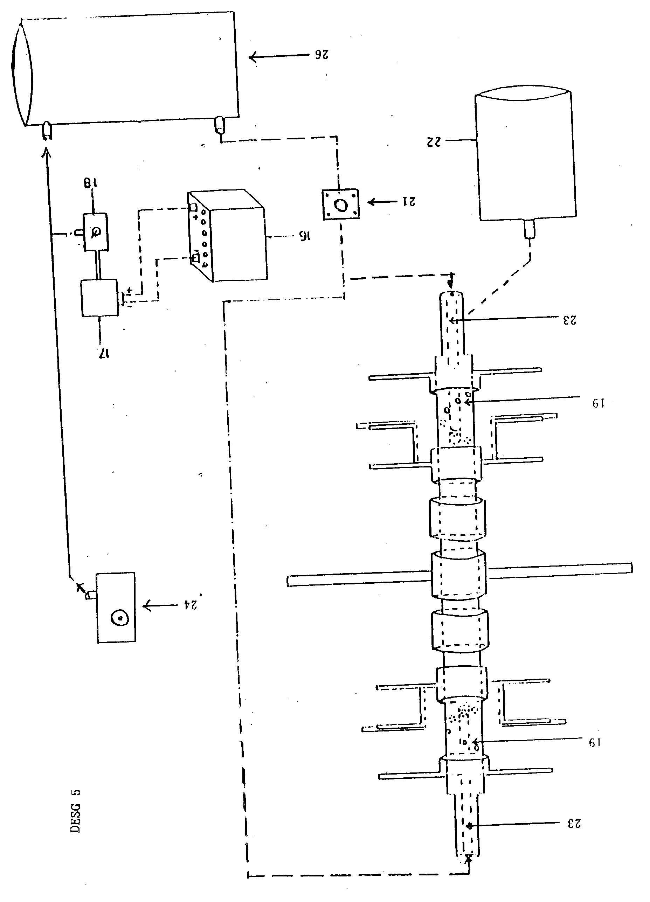

## Patentansprüche

1. Aggregat zur Erzeugung mechanischer Energie bestehend aus einem Schwungrad, das auf einer an beiden Enden gelagerte und für die Ringverteilung für das pneumatische Steuerungssystem speziell konstruierte Antriebswelle (1) angebracht ist ist beiderseits mit asymetrischen Hauptgelenkarmen (6) versehen . Die Hauptgelenkarme sind wiederum mit Hauptbeschwerern (7) bestückt und dienen dazu, durch systematisch gesteuerte Verlagerung des Schwerpunktes wirkender Schwere- und Fliehkräfte über das unmittelbare Auf- und Zuklappen der Hauptgelenkarme das Ungleichgewicht zu erreichen und die wirkenden Kräfte in die Drehrichtung des Schwungrades und somit zum Rotieren der Antriebswelle im Uhrzeigersinn zu leiten.

2. Aggregat zur Erzeugung mechanischer Energie nach Anspruch 1, dadurch gekennzeichnet, dass das gesteuetre Aufklappen und Zuklappen der Hauptgelenkarme (6) auf der jeweilig symetrisch aufgeteilten Schwungradhälfte nach erfindungsgemässer Entwicklung so funktioniert, dass während ein Hauptgelenkarm infolge des Gewichts des Hauptbeschwerers und des unmittelbaren Mitwirkens des mit Sekundärbeschwerern (8) versehenen Sekundärgelenkarmes (9) auf einer Seitenhälfte zum Aufklappen übergeht, sind die fünf vorgehenden Hauptgelenkarme durch Einwirkung der Haupt- und Sekundärbeschwerer schon aufgeklappt, während auf der anderen Seitenhälfte des Schwungrades der siebente Hauptgelenkarm durch Einwirkung des Gegengewichts des Sekundärgelenkarmes und des gesteuerten Rückhubs des Pneumatiksystems (10) zum Zuklappen überführt und an der Antriebswelle (1) festgehalten wird. Die restlichen fünf Hauptgelenkarme liegen an der Antriebswelle solange auf, bis diese wieder in den Bereich der aufzuklappenden Seitenhälfte des Schwungrades übergehen und an fangen, wieder durch Einwirkung des Sekundärgelenkarmes und dessen Gewichts nacheinander aufzuklappen.

3. Aggregat zur Erzeugung mechanischer Energie, nach Anspruch 1, dadurch gekennzeichnet,dass die in das gesamte Kreissystem eingeschaltete Starter- und Reglervorrichtung (19,25) das Antriebsaggregat mit Hilfe des Pneumatiksystems zum Anlaufen bringt.
Die Funktion des Pneumatiksystems wird mittels entsprechender Schaltregler (25) nur aktiviert, wenn die Hauptgelenkarme vom aufklappenden Zustand zum Zuklappen übergehen, um dadurch eine Verlagerung des Schwerpunktes des Gleichgewichts mit unmittelbarer Unterstützung der Sekundärgelenkarme zu bewirken und eine zusätzliche Stabilisierung des Aggregatslaufvorganges herbeizuführen.

4. Aggregat zur Erzeugung mechanischer Energie nach Anspruch 1, 2 und 3 dadurch gekennzeichnet, dass die Erfindung als abgeschlossenes System für sich beansprucht, im Gegensatz zu bisher bekannten Antriebsaggregaten aller Art nur für die Startphase eine herkömmliche Energiequelle eines Akkumulators (16) zu beanspruchen, um alsdann aus eigener Kraft mechanische Kräfte zu entfachen, die in jede beliebige Energieform unzuwandeln sind.
Die Eigenständigkeit des Antriebsaggregats wird dadurch erreicht, indem die in das gesamte Kreissystem eingeschaltete Starter- und Schaltreglervorrichtung (19, 25) das Antriebsaggregat zum Anlaufen bringt.
Die Arbeitsweise dar Strarter- und Schaltrervorrichtung ist dadurch gekennzeichnet, dass der mit Hilfe des Akkumulators (16) gestartete Elektromotor (17) einen Hilfs-Kompressor (18) antreibt und Luft in einen Luftdruckbehälter einbläst (26), bis ein Uberdruck von 2 bar erreicht wird (Betriebsdruck). Damit ist die Arbeit der Hilfsenergiequelle beendet.
Die unter Uberdruck stehende Luft wird mit Hilfe eines Ablassreglers (21) in die Lângsbohrung der Antriebswelle beiderseits eingeleitet (23) und von dort aus mit Hilfe von Schaltreglern (25) in das Pneumatiksystem weitergeleitet und der Rückhub verursacht. Der Rückhub führt mit zusätzlicher Unterstützung des Sekundärbeschwerergewichts zum Aufliegen des Sekundärgelenkarmes auf der Antriebswelle, die ihrerseits zum systematisch gesteuerten Zuklappen und Zugeklappthalten der Hauptgelenkarme auf der Antriebswelle nacheinander führen.
